# EUROPEAN PATENT APPLICATION

(11) **EP 2 756 769 A2**
(43) Date of publication of application: **23.07.2014**
(21) Application number: 14151661.7
(22) Date of filing: 17.01.2014
(51) Int. Cl.: A41C 5/00, A41C 3/14, B29C 45/14

(54) **Bra cup unit and method of manufacturing the same**

(30) Priority: 18.01.2013 GB 201300912
(71) Applicant: Padula, Antonio de Micco, 00135 Rome (IT)
(72) Inventor: Padula, Antonio de Micco, 00135 Rome (IT)
(74) Representative: Gaunt, Thomas Derrick

(57) **Abstract**

A bra cup unit and a method of manufacturing the same (100), in which a material is provided in a liquid state and then injected into a pre-heated mould (102), to mould the material in the liquid state into a bra cup unit within the mould. The material in the mould is then cured into a solid state to form the bra cup unit (103).

## Description

The present invention relates to a bra cup unit and method of manufacturing the same.

The manufacturing of bras, and specifically bra cups for bras, incorporates industrial processes in order to achieve a desired final product having the necessary shape, flexibility, and durability. Conventionally, bra cups are manufactured and later incorporated into bras or other articles of clothing. The bra cups themselves are formed using a compression moulding process, in which a preformed solid foam form is created into a bra cup. A polyurethane foam is manufactured in the conventional method in a basic shape such as a cuboid or other hexahedron. The polyurethane foam is then placed in a mould and compressed into a desired bra cup shape. This way, the bra cup is formed by pressing the polyurethane foam. Additionally, the conventional processes include placing fabric into the mould with the foam, and simultaneously compressing the foam into the bra cup shape and bonding the foam to the fabric.

However, bra cups manufactured using the compression moulding process suffer from a number of undesirable characteristics. Furthermore, the types of bra cup shapes that can be manufactured using the compression moulding process are limited because the bra cup is formed by pressing a foam into a shape that is different from its original state. The foam, now having varying densities according to varying thicknesses created during compression, has a tendency to expand back toward its original shape once formed into the bra cup shape, thus deforming the bra cup over time. Moreover, since the foam itself begins as a solid block with uniform thickness and is pressed into a desired shape, the foam must have a thickness greater than or equal to the maximum desired thickness of the thickest portion of the desired bra cup.

In the conventional compression moulding manufacturing method, a foam block is provided to be formed into the bra cup, the foam is placed into the mould having a thickness equal to or greater than the maximum thickness of the bra cup to be manufactured. Thus, the minimum possible thickness of the resulting bra cup is dependent upon the compressibility of the foam and the thickness of the thickest portion of the desired bra cup shape. The possible shapes of a bra cup are further limited by the inability of the polyurethane foam form to be pressed into shapes with a large variation in thickness over a smaller area. The conventional compression moulding process of manufacturing bra cups is therefore limited in the possible shapes and types of bra cups which can be manufactured.

Furthermore, the typical process for making a bra involves first forming the two bra cups and then sewing these into a fabric frame to locate them in a bra arrangement. However, this is a relatively complex process, which results in relatively high manufacturing costs and a high vulnerability to manufacturing defects. For example, with such a process, each component must be aligned with the other components as it is attached to the assembly, and therefore defects resulting from manufacturing tolerances in one component risk compromising the whole assembly.

The present invention seeks to overcome the above problems associated with the prior art.

According to a first aspect of the present invention, there is provided a method of manufacturing a bra cup unit, the method comprising:-
providing a material in a liquid state;
heating the mould to a temperature of between 40°C and 150°C;
injecting the material in the liquid state into a mould by an injection moulding process to mould the material in the liquid state into a bra cup unit within the mould; and
curing the material in the mould into a solid state to form the bra cup unit.

By heating the mould to a temperature of between 40°C and 150°C prior to injecting the liquid material, it prevents thermal shock in the liquid material, thereby avoiding hot spots or hard surface areas. It also allows the liquid material to fully fill the mould, reaching the far extremities of the mould, whilst avoiding any other defects to the bra cup unit that may occur due to thermal shock, such as lumps, air holes or air pockets.

Such an injection moulding process also greatly increases the type of shapes that can be manufactured than can be possible using the conventional compression moulding process described above. By injecting a liquid material into a mould and allowing the liquid material to cure into a desired bra cup shape, a wider variety of bra cups shapes may be manufactured. Because the bra cup unit is formed from a preformed solid foam block, no limitation on the variation in thickness of a bra cup unit shape exists, and a bra cup unit with greater variation in the thickest portions and the thinnest portions is possible. Additionally, the bra cup unit manufactured according to the injection moulding process may not have the tendency to expand, because the liquid material is cured directly into a solid state having the desired shape.

In this way, due to the mould temperature of between 40°C and 150°C, a number of bra cup unit shapes, discussed in the embodiments below, having, for example, a thin profile along an edge for greater invisibility against the bust of a wearer while providing push-up or a thicker apex for nipple coverage, may be possible. Such configurations may be considered to have an invisible pad when worn.

Preferably, the method further comprises applying a material forming flexible layer to the mould, prior to injecting the liquid material.

In this way, a flexible fabric-like layer is integrally formed on the outside surface of the bra cup unit during the injection moulding process. This streamlines and simplifies the manufacturing process since a secondary step of attaching a decorative or functional flexible layer to the bra cup unit is no longer required.

According to a second aspect of the present invention, there is provided a method of manufacturing a bra cup unit, the method comprising:-
applying a material forming a flexible layer to a mould;
providing a material in a liquid state;
injecting the material in the liquid state into a mould by an injection moulding process to mould the material in the liquid state into a bra cup unit within the mould; and
curing the material in the mould into a solid state to form the bra cup unit.

In this way, a flexible fabric-like layer is integrally formed on the outside surface of the bra cup unit during the injection moulding process. This streamlines and simplifies the manufacturing process since a secondary step of attaching a decorative or functional flexible layer to the bra cup unit is no longer required.

Conveniently, the material forming a flexible layer may be fabric or cloth.

Alternatively, the material forming a flexible layer may be fabric or cloth forming particles, which form a fabric or cloth layer when the mould is heated during the injection moulding process. In this way, the inside surface of the mould is coated with fabric particles, fabric dust or flock, which form a unified flexible layer during the injection moulding process.

Conveniently, the material forming a flexible layer bonds to the bra cup unit during curing.

Alternatively, the material forming a flexible layer is bonded to the bra cup unit after the bra cup unit is cured. This process may use, for example, a bonding, binding or glueing agent to provide additional tensile strength.

Preferably, the flexible layer forms part of the bra assembly.

Preferably, the method further comprises providing an insert within the mould, prior to injecting the liquid material, such that the insert is at least partially embedded within the bra cup unit.

In this way, the insert is integrally formed into the bra cup unit as part of its manufacturing process. Such an insert may be made of the same material as the bra cup unit. This allows, for example, the bra cup unit to be formed with built in support in a one step process. Furthermore, this also streamlines and simplifies the manufacturing process, since a secondary step of attaching the insert support to the bra cup is no longer required.

Preferably, the insert is an underwire.

Alternatively, the insert is a rigid panel.

Preferably, the rigid panel is a plastic, fabric or injection moulded material. For example, the insert may be made of polyurethane, the same material as the bra cup unit or of any other plastic.

The bra cup unit may comprise 1 or 2 bra cups.

Preferably, the bra cup unit comprises 2 bra cups that are positioned relative to one another in a bra arrangement. In this way, the two bra cups are formed in a position for fitting to a bust, which simplifies their subsequent alignment when assembling the bra. The bra arrangement may further comprise a bridge to join the bra cups together.

Preferably, the liquid is injected into a closed mould.

Alternatively, the liquid is injected into an open mould.

Preferably, if the liquid is injected into an open mould, the mould is closed between 0.05 seconds and 10 seconds after the liquid has been injected.

Preferably, during curing, the mould is maintained at a constant temperature.

Preferably, during curing, the mould is maintained at a temperature of between 35°C and 155°C.

Preferably, during curing the mould is maintained at the injection temperature plus or minus 10°C.

Conveniently, the mould may be metallic, such as bronze, steel or any other ferrous material.

Alternatively, the mould may be a plastic, such as polypropylene or Teflon (RTM).

Preferably, the mould is coated with a non stick surface coating. In this way, the bra cup unit does not stick to the inside surface of the mould. This results in the liquid material fully filling the mould, reaching the far extremities of the mould, whilst avoiding defects in the bra cup unit such as lumps, air holes or air pockets. The non stick coating also helps to ensure a smooth release of the bra cup unit when the injection moulding process has finished.

Preferably, the mould is coated with a release agent. In this way, the inside surface of the mould is coated in a release agent, which ensures a smooth release of the bra cup unit when the injection moulding process has finished.

Preferably, the mould is coated with a colouring agent. In this way, the inside surface of the mould is coated with a colouring agent to provide a surface colour for the bra cup unit being produced.

Preferably, mould is heated to a temperature of between 40°C and 95°C.

According to a third aspect of the invention, there is provided a method of making a bra comprising:-
making two bra cups according to the above method; and
connecting the bra cups in a bra arrangement.

According to a fourth aspect of the invention, there is provided a method of manufacturing a bra cup unit, the method comprising:-
providing a material in a liquid state;
applying fabric or cloth forming particles to a mould, the particles forming a fabric or cloth layer when the mould is heated;
injecting the material in the liquid state into the mould by an injection moulding process for moulding the material in the liquid state into a bra cup unit within the mould; and
curing the material in the mould into a solid state to form the bra cup unit.

In this way, prior to injecting the liquid material, the inside surface of the mould is coated with fabric particles, fabric dust or flock, which form a unified flexible layer on the outside surface of the bra cup unit during the injection moulding process. This streamlines and simplifies the manufacturing process since a secondary step of attaching a decorative or functional flexible layer to the bra cup unit is no longer required

The invention will now be described, by way of illustration only, with reference to the accompanying drawings in which:-
Figure 1 shows a side view of a first bra cup unit manufactured according to an embodiment of the invention;
Figure 2 shows a cross sectional view of the first bra cup unit shown in Figure 1;
Figure 3 shows a side view of a second bra cup unit manufactured according to an embodiment of the invention;
Figure 4 shows a cross sectional view of the second bra cup unit shown in Figure 3;
Figure 5 shows a side view of a third bra cup unit manufactured according to an embodiment of the invention;
Figure 6 shows a cross sectional view of the third bra cup unit shown in Figure 5;
Figure 7 shows a side view of a fourth bra cup unit manufactured according to an embodiment of the invention;
Figure 8 shows a cross sectional view of the fourth bra cup unit shown in Figure 7;
Figure 9 shows a cross sectional view of an alternative embodiment of the fourth bra cup unit shown in Figure 7; and
Figure 10 is a flow chart of an injection moulding process.

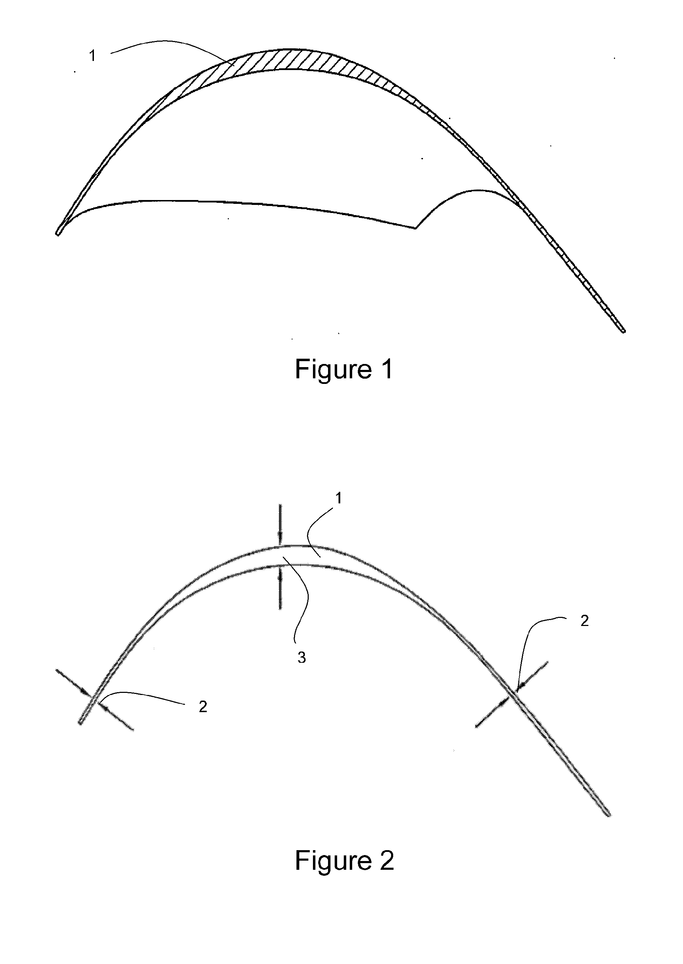

Figures 1 and 2 illustrate a first bra cup unit formed by the injection moulding process of an embodiment of the present invention. As shown in Figure 1, a bra cup unit is formed with a thick portion at the apex of the bra cup unit and thinner portions along the edges of the bra cup unit. Such a variation in thicknesses would allow for sufficient coverage of a nipple area while still providing a thin portion which may provide greater invisibility against the bust of a wearer. As shown in Figure 2, the bra cup unit of Figure 1 has a thicker portion 3 and thinner portions 2 around the edges of the bra cup unit. The thicker portion 3 may have a thickness of approximately 4 mm and the thinner portion 2 may have a thickness of 0.3 mm. Each individual edge may not be required to be of the same thickness.

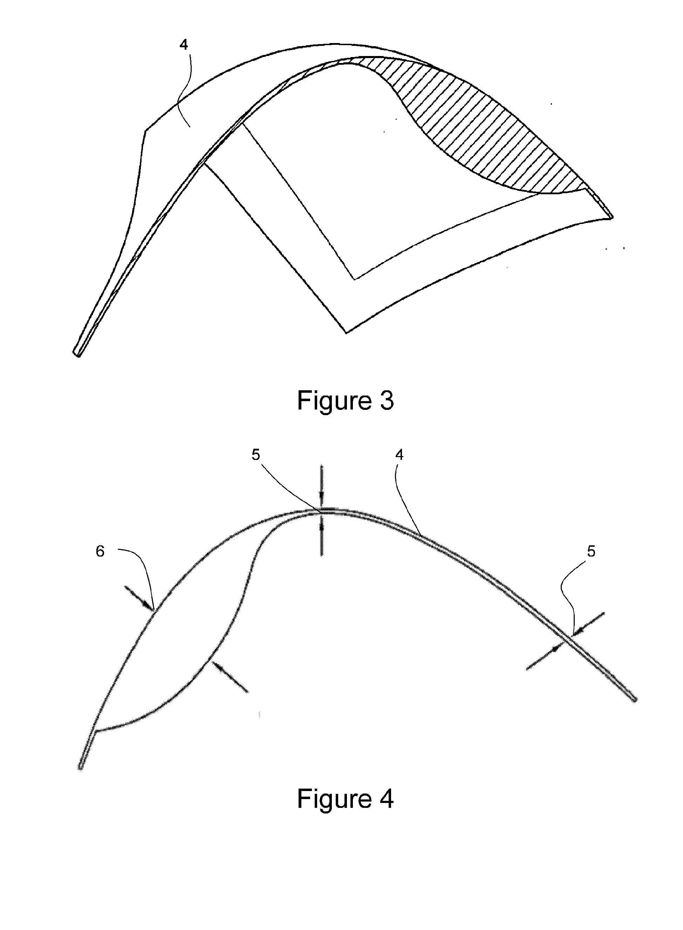

Figures 3 and 4 illustrate a second bra cup unit formed by the injection moulding process of an embodiment of the present invention. As shown in Figure 3, a bra cup unit is formed with a thicker push-up portion disposed at a bottom and an inside of a bra cup unit. As shown in Figure 4, the bra cup unit of Figure 3 has a thicker portion in a functional region such as a push-up area 6, and becomes thinner in non-functional areas 5, to provide greater invisibility against the bust of a wearer, similar to the first embodiment. Here, a much greater variation between the thickness of the push-up area 6 and the nonfunctional areas 5 is possible using the injection moulding process described herein. For example, a bra cup unit having a push-up portion 6 of a thickness of approximately 21 mm and a non-functional area 5 of a thickness of approximately 0.3 mm is possible. Though an exemplary bra cup unit of a push-up type is illustrated in Figures 3 and 4, other bra types with thicker functional areas and thinner nonfunctional areas are possible with the injection moulding process described herein. Examples of such additional functional types of bra cup units include, but are not limited to, creating balconette-type shapes or providing extra support and shaping along the underarm.

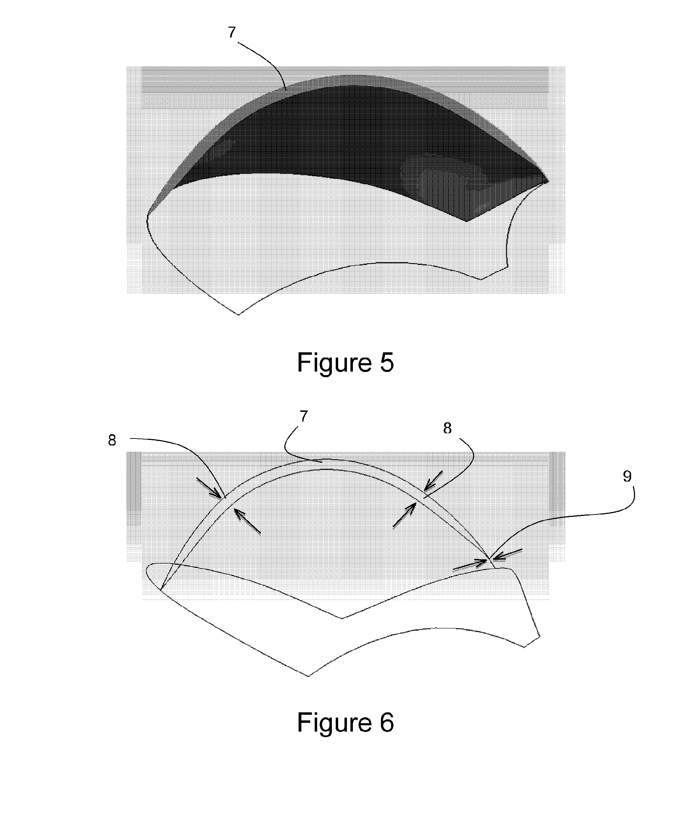

Figures 5 and 6 illustrate a third bra cup unit formed by the injection moulding process of an embodiment of the present invention. As shown in Figure 5, a bra cup unit is formed with a constant thickness 8 throughout the bra cup unit with tapered thinner edges. Such a constant thickness through the main body allows for sufficient support of a breast whilst still providing a region of thinness at the edges for smoothness and/or garment manufacturing. As shown in Figure 6, the bra cup unit of Figure 5 has constant thickness 8 throughout the cross section of the bra cup unit and thinner portions 9 around the edges of the bra cup unit. In more specific embodiments, the constant thickness 8 of the bra cup unit may be approximately 4 mm and the edges 9 may have a thickness of 0.3 mm. Each individual edge is not required to be of the same thickness.

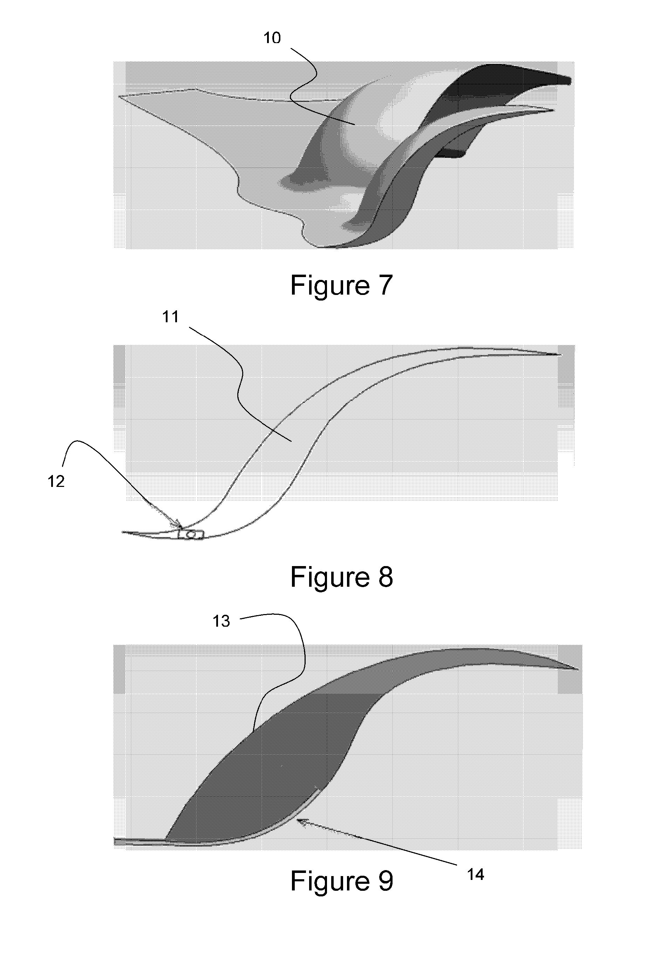

Figures 7 and 8 illustrate a fourth bra cup unit of an embodiment of the present invention. In this example, during the production process, the mould was configured for forming a bra cup unit comprising two bra cups joined together by a bridge. The bridge acts to locate the bra cups in a bra arrangement such that they are positioned relative to one another so as to be suitable for fitting to a bust. An underwire insert 12 is also provided within in the mould prior to the injection of the bra cup material such that it becomes embedded within the bra cup unit, as shown in the cross section shown in Figure 7. A cloth layer may also be provided in the mould prior to the injection of the bra cup material so that it binds to the outside surface of the bra cups.

In this way, a bra arrangement may be created in a single moulding operation, with the components being aligned as part of the moulding process. This thereby minimises the subsequent manufacturing steps required to produce a finished bra and reduces the risk of any alignment or other manufacturing defects. This greatly simplifies manufacture compared to a conventional bra production process, where two separate bra cups, a bridge, an underwire, wings and a back strap must each be separately assembled and aligned. Accordingly, the present invention allows for lower manufacturing costs and an improved production rate.

Figure 9 shows a cross sectional view of an alternative embodiment of the bra cup unit shown in Figure 7 and 8. In this embodiment, the insert is a rigid panel 14 rather than the underwire 12 and is embedded into the body of the bra cup unit to provide built-in support to the wearer. The rigid panel 14 is made of a material more rigid than the bra cup unit and is rigid enough to provide support to the bra cup when the bra cup unit is worn. The rigid panel 14 may be, for example, a plastic, a fabric or an injection moulded material.

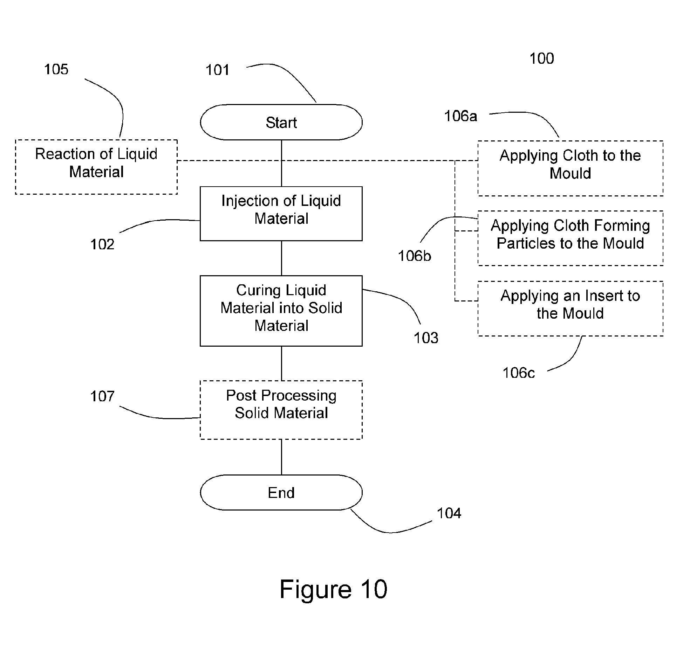

Figure 10 is a flow chart showing a method of manufacturing a bra cup unit according to an embodiment of the present invention.

At step 101, the method 100 begins with the mould being heated to a temperature of between 40°C and 150°C.

At step 102, a liquid material is injected into a mould having the desired shape of the bra cup unit. The pre-heating of the mould avoids the liquid material being subjected to thermal shock as it is injected into the mould, thereby minimising the risk of defects and allowing the liquid to fully fill the extremities of the mould.

Since the liquid material is injected into the mould in a liquid state, the bra cup unit resulting from the injection is not under the constraint discussed above with respect to the compression moulding of foam blocks in the conventional art. Specifically, the resulting bra cup unit does not have a tendency to deform, and is provided with more constant density throughout. Because of this, the mould may be formed with greater variance between the thickest and thinnest portions of the desired bra cup unit shape because the liquid material may directly cure into a solid with the desired shape.

In embodiments, the liquid can be injected in to an open mould or a closed mould. If the liquid is injected in a closed mould the mould needs to sealed throughout the two halves of the mould except for where vents are provided. The vents are designed to ensure air and other gases that might be generated during the curing process escape the mould. If the liquid is injected in to an open mould, the mould must be closed after injecting the liquid into it between 0.05 seconds and 10 seconds after the liquid is injected. When the mould is closed, the mould can be sealed so that it is air tight throughout the two halves of the mould or it can be made to not fully seal. If it is made to form an airtight seal, vents are provided to allow for air and other gases that might be generated during the curing process to escape the mould.

At step 103, the liquid material is cured into a solid inside the mould to form a body having the shape of the bra cup unit defined by the mould occurs. Further, the curing process may occur at varying temperatures and durations of time to create a solid bra cup unit having a desired hardness, flexibility, or other material characteristics drawn to specific application requirements.

At step 105, which may occur optionally at any time before step 102, a reaction of a liquid material occurs. Generally, the reaction at step 105 may include any or all preparation steps of the liquid material necessary to place the material in a suitable state for being formed into the bra cup unit. The reaction itself may include a number of reactions with various types of gases as may be known in the art to place the liquid into a state in which it can be successfully moulded into a desired shape. A polyurethane-or silicone-based material may, for example, be reacted with the atmosphere or another gaseous mixture approximating or matching the composition of atmosphere. Similarly, a latex-or rubber-based material may be reacted with nitrogen or a nitrogen-based gas as appropriate. Other combinations of materials and gaseous reactants suitable to use in method 100 specifically, or the method according to this application more generally, may be substituted as is known or may become known.

At step 106a, which may occur optionally at any time before step 102, a cloth material is applied to the mould. Alternatively, at step 106b, cloth forming particles are applied to the mould. The cloth forming particles may be applied so that they bond to the bra cup unit during the curing process, occurring at step 103, forming a flexible material layer on the outside surface of the bra cup unit. Alternatively, the cloth material or cloth forming particles may be applied, attached, bonded, or otherwise joined at any point after the curing in accordance with the assembly of a garment incorporating the bra cup unit. Additionally, at step 106c, an insert may be applied to the mould so that it becomes at least partially embedded within the bra cup unit during the curing process, occurring at step 103. This insert may be an underwire, as shown in Figure 8, or a piece of rigid material, as shown in Figure 9. Alternatively, the insert may be applied, attached, bonded, or otherwise joined at any point after the curing in accordance with the assembly of a garment incorporating the bra cup unit.

At step 107, which may occur optionally at any time after step 103, post-processing of the solid bra cup unit occurs. Here, additional processing may be performed, such as applying a coating to the bra cup unit to prevent discolouration or other deterioration of the bra cup unit, removal of flash or other post-manufacturing cleanup, or application of cloth or installation into a garment or product.

At step 104, the method 100 ends.

Although certain specific embodiments and examples are given above with respect to both the injection moulding process and the bra cup unit configurations resulting there from, the above descriptions are not to be taken to limit this disclosure to those descriptions. The bra cup unit and method of manufacturing the same may incorporate additional physical components or processes relating to bras, bra cup units, or the manufacture of bras or bra cup units, that may be known or may become known, without departing from scope of the above disclosure.

For example, the mould may be shaped to form a bra cup unit with a first region and a second region having a thickness greater than the thickness of the first region.

In addition, the second region may have a thickness at least ten times greater than the thickness of the first region.

Furthermore, the second region may have a thickness at least fifty times greater than the thickness of the first region.

Furthermore, the second region may be formed at a bust point area of the bra cup or in a push-up area of the bra cup.

Furthermore, the moulding may shape a bra cup unit with a substantially uniform constant cross section throughout the shape of the cup.

Furthermore, the curing may further form the bra cup unit such that the bra cup unit has a constant density throughout.

Furthermore, the method may further comprise reacting the material with a preparing agent prior to the injecting.

Furthermore, the material may be polyurethane-based, silicone-based, latex-based or rubber-based.

Furthermore, the preparing agent may be atmosphere or nitrogen.

## Claims

1. A method of manufacturing a bra cup unit, the method comprising:-
providing a material in a liquid state;
heating a mould to a temperature of between 40°C and 150°C;
injecting the material in the liquid state into the mould by an injection moulding process for moulding the material in the liquid state into a bra cup unit within the mould; and
curing the material in the mould into a solid state to form the bra cup unit.

2. A method according to claim 1, further comprising applying a material forming a flexible layer to the mould.

3. A method of manufacturing a bra cup unit, the method comprising:-
applying a material forming a flexible layer to a mould;
providing a material in a liquid state;
injecting the material in the liquid state into the mould by an injection moulding process for moulding the material in the liquid state into a bra cup unit within the mould; and
curing the material in the mould into a solid state to form the bra cup unit.

4. A method according to claim 2 or 3, wherein the material forming a flexible layer is a fabric or cloth, or fabric or cloth forming particles for forming a fabric or cloth layer when the mould is heated during the injection moulding process.

5. A method according to claim 2 or 3, wherein the material forming a flexible layer bonds to the bra cup unit during curing.

6. A method according to claim 2 or 3, wherein the material forming a flexible layer is bonded to the bra cup unit after the bra cup unit is cured.

7. A method according to any one of claims 2 to 6, wherein the flexible layer forms part of the bra assembly.

8. A method according to claim any preceding claim, further comprising providing an insert within the mould such that the insert is at least partially embedded within the bra cup unit.

9. A method according to claim 8, wherein the insert is an underwire or a rigid panel.

10. A method according to claim 9 wherein the rigid panel is a plastic, fabric or injection moulded material.

11. A method according to any preceding claim, wherein the bra cup unit comprises 2 bra cups that are positioned relative to one another in a bra arrangement.

12. A method according to any preceding claim, wherein the liquid is injected into an open mould and after injecting the liquid into the open mould, the mould is closed between 0.05 seconds and 10 seconds after the liquid has been injected.

13. A method according to any preceding claim, wherein during curing the mould is maintained at a temperature of between 35°C and 155°C.

14. A method according to any preceding claim, wherein during curing the mould is maintained at the injection temperature plus or minus 10°C.

15. A bra cup unit manufactured according to the method of any preceding claim.
